# EUROPÄISCHE PATENTSCHRIFT

(11) **EP 2 005 150 B1**
(45) Veröffentlichungstag und Bekanntmachung des Hinweises auf die Patenterteilung: **22.06.2016**
(21) Anmeldenummer: 07727171.6
(22) Anmeldetag: 21.03.2007
(51) Int. Cl.: G01N 27/36

(54) **ELEKTROCHEMISCHER SENSOR**
ELECTROCHEMICAL SENSOR
CAPTEUR ÉLECTROCHIMIQUE

(30) Priorität: 13.04.2006 DE 102006017981
(43) Veröffentlichungstag der Anmeldung: 24.12.2008
(73) Patentinhaber: Endress + Hauser Conducta GmbH+Co. KG, 70839 Gerlingen (DE)
(72) Erfinder: AUERSWALD, Lothar, 04720 Döbeln (DE); FANSELOW, Christian, D-09326 Geringswalde (DE)
(74) Vertreter: Andres, Angelika Maria
(86) Internationale Anmeldenummer: PCT/EP2007/052695
(87) Internationale Veröffentlichungsnummer: WO 2007/118753

(56) Entgegenhaltungen:
- EP-A1- 0 076 464
- US-A- 4 012 308
- US-A- 4 128 468
- US-A- 4 162 211
- US-A- 4 608 148
- US-A- 4 814 058

## Beschreibung

Die vorliegende Erfindung betrifft einen elektrochemischen Sensor, insbesondere einen potentiometrischen Sensor, beispielsweise einen pH-Sensor. Eine gängige Ausgestaltung eines gattungsgemäßen Sensors ist eine Einstabmesskette zur elektrochemischen Messung und Regelung von pH-Werten in vielen Bereichen der Chemie, Umweltanalytik, Medizin, Industrie und Wasserwirtschaft eine breite Anwendung findet. Einstabmessketten vereinigen eine Arbeitselektrode und ein Referenzelement in einer Baugruppe.

Als Referenzelemente benutzt man beispielsweise eine Silber/ Silberchloridelektrode, welche in einen Referenzelektrolyten, beispielsweise KCl, eingetaucht ist, der in einer Ringkammer um die Arbeitselektrode angeordnet ist. Der Referenzelektrolyt kann beispielsweise als Flüssigkeit und/oder als Gel vorliegen. Die Arbeits- bzw. Messelektrode umfasst gewöhnlich ein Glasrohr welches messmedienseitig mit einer Glasmembran abgeschlossen und mit einer Pufferlösung gefüllt ist. Elektrodendraht in die Pufferlösung getaucht.

Insofern als die Glasmembran eine sehr hohe Impedanz aufweist, ist das gemessene Potential sehr störanfällig, weshalb es möglichst gut abgeschirmt sein sollte.

Der Referenzelektrolyt in der Ringkammer, welche die Messelektrode umgibt ist in gewisser Weise als Abschirmung geeignet, jedoch weist er ein beispielsweise temperaturabhängig variables Volumen auf, so dass oberhalb des Referenzelektrolyten ein Luftraum entstehen kann, welcher die Messelektrode umgibt, so dass diese in dem axialen Abschnitt des Luftraums nicht ausreichend abgeschirmt ist.

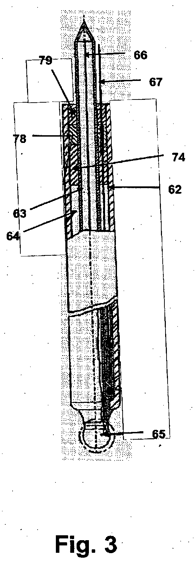

Fig. 3 zeigt zur Erläuterung eine Einstabmesskette 61 aus dem Stand der Technik, welche zwischen einem äußeren Rohr 62 und einem inneren Rohr 63 eine ringförmige Referenzkammer 64 aufweist, die mit einem Referenzelektrolyten gefüllt ist Das Referenzpotential wird mit einem Referenzelektrodendraht 67 abgeleitet, der sich durch verschiedene Dichtungen hindurch in axialer Richtung in die Referenzkammer erstreckt. Im oberen Ende der Referenzkammer, 64 ist ein so genannter Kompensator 74 angeordnet, der einen geschlossenporigen elastischen Schaum umfasst. Der Schaum des Kompensators wird druckabhängig komprimiert, so dass innerhalb eines Arbeitsbereichs des Schaums das veränderliche Volumen des Referenzelektrolyten ausgeglichen werden kann. Oberhalb des Kompensators befinden sich ein Silikonverguss 78 und ein Epoxydharzverguss 79. Die beschriebene Lösung ist aus folgenden Gründen nachteillg. Elnerselts Ist der Volumenausgleich durch die begrenzte Komprimierbarkeit des Schaums beschränkt, und andererseits kann das Volumen des Schaums nicht beliebig erhöht werden, da im Bereich des Schaums keine wirksame Abschirmung erfolgt. Weiterhin ist mit Dichtigkeitsproblemen zu rechnen, da sich der Schaum bezüglich des Referenzelektrodendrahts bewegt, und diese Bewegungen sich auch noch auf die Grenzfläche zwischen dem Silikonverguss und dem Elektrodendraht auswirken können.

Aus US 4,012,308 ist eine Kombinationselektrode mit einer Mess- und einer Referenzhalbzelle bekannt. Die Referenzhalbzelle ist mittels einer ringförmigen Dichtung gegenüber der Umgebung verschlossen. Diese Dichtung berührt die Oberfläche unter Vermeidung der Ausbildung eines Luftraums zwischen der Dichtung und dem Bezugselektrolyten. Die Dichtung ist durch Elnkleben innerhalb der Referenzkammer fixiert. Eine elektrische Schirmung der Messelektrode wird mittels einer metallischen Kappe erreicht, die das rückseitige Ende der Kombinationselektrode abdeckt, und die elektrisch leitend über eine gegen die Kappe gespannte, am rückseitigen Ende der Referenzkammer durch Klebung fixierte Metallfeder mit dem Referenzelektrodendraht verbunden ist.

Es ist daher die Aufgabe der Erfindung, eine Einstabmesskette bereitzustellen, welche die Nachteile des Stands der Technik überwindet. Die Aufgabe wird erfindungsgemäß gelöst durch die Einstabmesskette gemäß des unabhängigen Patentanspruchs 1.

Die erfindungsgemäße Einstabmesskette umfasst ein erstes Rohr welches zumindest in radialer Richtung elektrisch nicht leitend ist; eine Messmembran, welche an einem ersten Endabsohnitt des ersten Rohres angeordnet ist und das erste Rohr unter Bildung einer Messkammer dicht verschließt; ein zweites Rohr, welches das erste Rohr zumindest abschnittswelse umgibt und mit dem ersten Rohr direkt oder indirekt verbunden ist, so dass zwischen dem ersten Rohr und dem zweiten Rohr eine ringförmige Referenzkammer ausgebildet ist; eine Pufferlösung, die in der Messkammer angeordnet ist; eine Elektrolytlösung, die in der Referenzkammer angeordnet ist; eine erste Elektrode, die mit der Pufferlösung in Kontakt ist, um ein erstes Potential abzuleiten; und eine zweite Elektrode, die mit dem Elektrolyten In Kontakt Ist, um ein zweites Potential abzuleiten: wobei ferner in der Referenzkammer ein ringförmiges Dichtelement angeordnet ist, welches in der Ringkammer axial verschiebbar ist und das von der Elektrolytlösung eingenommene Volumen in axialer Richtung begrenzt, wobei das Dichtelement mittels eines elektrisch leitenden elastischen Verformungskörpers, welcher das erste Rohr umgibt, axial vorgespannt ist, die zweite Elektrode mit dem Verformungskörper elektrisch leitend verbunden ist, so dass das Potential der zweiten Elektrode über den Verformungskörper ableitbar ist.

Der elastische Verformungskörper dient vorzugsweise als elektrische Schirmung für den axialen Abschnitt der ersten Elektrode, der von dem Verformungskörper umgeben ist.

In einer Ausgestaltung der Erfindung ist die zweite Elektrode mit einem Endabschnitt an dem Dichtelement befestigt, und bewegt sich zumindest abschnittsweise mit dem Dichtelement in axialer Richtung in dem Referenzbehälter.

In einer Ausgestaltung der Erfindung umfasst die Einstabmesskette weiterhin ein ringförmiges Trägerelement, welches in einem Endabschnitt der Referenzkammer, welcher dem ersten Endabschnitt des ersten bzw. zweiten Rohres abgewandt ist, mit dem ersten und/oder dem zweiten Rohr fest verbunden ist, wobei der elastische Verformungskörper zwischen dem Trägerelement und dem Dichtelement axial eingespannt ist. Das Trägerelement kann weiterhin die Referenzkammer verschließen.

Gemäß einer Weiterbildung der Erfindung unfasst die Einstabmesskette weiterhin einen elektrisch leitenden, insbesondere metallischen Ableitkörper zun Ableiten des Potentials der zweiten Elektrode, wobei der Ableitkörper mit dem Trägerkörper fest verbunden ist, und mit der zweiten Elektrode über den elastischen Verformungskörper direkt oder indirekt im galvanischen Kontakt steht. Vorzugsweise weisen der Trägerkörper und/oder das Dichtelement einen elektrisch leitfähigen Werkstoff auf.

In einer derzeit bevorzugten Ausgestaltung der Erfindung weist die Elektrolytlösung KCl auf, und die zweite Elektrode umfasst eine Ag/AgCl-Elektrode. Zur Verlängerung der Diffusionspfades von Silberionen, welche im Referenzelektrolyten gelöst sind, und welche ein Diaphragma eines Stromschlüssels zwischen dem Referenzelektrolyten und einem die Einstabmesskette umgebenden Mediun verblocken könnten, umfasst die Einstabmesskette in einer Ausgestaltung der Erfindung ein einseitig geschlossenes Kapillarrohr, welches in der Referenzkammer angeordnet ist, und in welches sich die Ag/AgCl-Elektrode erstreckt.

Die Erfindung wird nun anhand der in den Zeichnungen dargestellten Ausführungsbeispiele erläutert.

Es zeigen:
Fig. 1: einen Längsschnitt durch eine erste Ausgestaltung einer erfindungsgemäßen Einstabmesskette;
Fig. 2: eine Ansicht eines Verformungskörpers einer erfindungsgemäßen Einstabmesskette; und
Fig. 3: einen Längsschnitt durch eine Einstabmesskette nach dem Stand der Technik, der in der Einleitung diskutiert wurde.

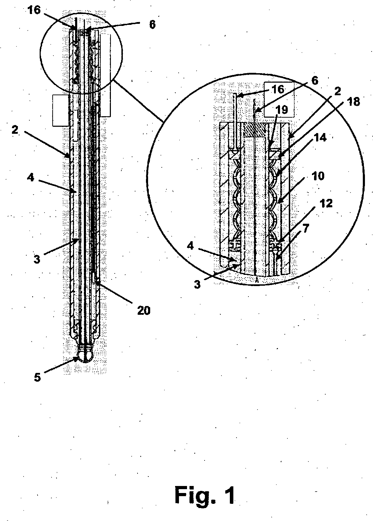

Die Einstabmesskette 1 in Fig. 1 umfasst ein inneres Rohr 3, welches an einem ersten Endabschnitt eine pH-Glasmembran 5 aufweist, welche das innere Rohr an einem ersten Endabschnitt abschließt. Das innere Rohr mit der pH-Glasmembran 5 dient als Messzelle bzw. Messkammer, und ist im Messbetrieb mit einer Pufferlösung von pH 7 gefüllt. Das pH-abhängige Messpotential, wird über einen Elektrodendraht 6 abgeleitet, der sich in axialer Richtung zu einem zweiten Endabschnitt des inneren Rohres 3 erstreckt und durch eine Durchführung herausgeführt ist.

Das innere Rohr ist von einem äußeren Rohr 2 koaxial umgeben, wobei das äußere Rohr im Bereich des ersten Endabschnitts mit dem inneren Rohr verbunden ist, so dass zwischen dem inneren und dem äußeren Rohr eine Ringkammer 4 gebildet ist. Die Ringkammer ist im Messbetrieb mit einem Referenzelektrolyten, beispielsweise 3N KCl, gefüllt und dient als Referenzkammer bzw. Referenzzelle für die Messkammer. Das äußere Rohr 2 weist zudem ein Diaphragma in einer Außenwand auf, welches als so genannter Stromschlüssel der Referenzzelle dient.

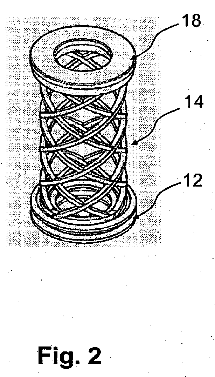

Im zweiten Endabschnitt der Ringkammer 4 ist ein Druckkompensator vorgesehen, der nun anhand der Detailvergrößerung in Fig. 1 erläutert wird. Der Druckkompensator umfasst einen zumindest in axialer Richtung elektrisch leitenden Dichtring 12, beispielsweise aus einem metallisierten Kunststoff, oder einen metallischen Dichtring mit elastischen Dichtlippen beispielsweise aus einem organischen Werkstoff, wobei die Unterseite des Dichtrings dem Referenzelektrolyten zugewandt ist, und diesen berührt. An der Unterseite des Dichtrings 12 ist weiterhin ein Silberdraht 7 der Referenzelektrode in geeigneter Weise befestigt. Er kann beispielsweise mit einem Leitkleber verklebt, eingegossen, geschweißt, formschlüssig oder im Klemmsitz gehalten sein. An der Oberseite des Dichtrings 12 ist ein leitfähiger, elastischer und axial flexibler Federkorb 14 befestigt, der im einzelnen in Fig. 2 dargestellt ist. Als Werkstoff für den Federkorb sind beispielsweise Metalle sowie metallisiere Elastomere und Kompositwerkstoffe geeignet.

Die Korbstruktur bewirkt eine effektive Schirmung des von dem Federkorb 14 umgebenen axialen Abschnitts der Arbeitselektrode.

An der dem Dichtring 12 abgewandten Oberseite des Federkorbs 12 ist eine elektrisch leitende Dichtscheibe 18 befestigt, welche, wie in Fig 1 dargestellt, mittels einer Klebschicht an dem äußeren Rohr 2 und dem inneren Rohr 3 befestigt ist, und die Ringkammer 4 dicht verschließt. Ggf. kann ein (hier nicht dargestellter) Entlüftungspfad durch die Dichtscheibe 18 vorgesehen sein, um einen Druckausgleich zwischen dem eingeschlossenen Volumen einer Luftkammer 10 oberhalb des Dichtrings 12 und der Umgebung der Einstabmesskette zu ermöglichen. Dieser Entlüftungspfad kann ggf. als Kapillarpfad ausgeführt sein, und Schutzmaßnahmen gegen Flüssigkeitsaustausch aufweisen, beispielsweise Filter.

Ein elektrisch leitender Kontaktstift 16 ist mit an der Oberseite der Dichtscheibe 18 im galvanischen Kontakt zu der Dichtscheibe befestigt. Im Ergebnis ist über den Dichtring 12, den Federkorb 14 und die Dichtscheibe 18 eine elektrisch leitende Verbindung zwischen dem Silberdraht 7 der Referenzelektrode und dem Kontaktstift 6 zum Abgriff des Referenzpotentials hergestellt.

Fig. 1 zeigt weiterhin ein Kapillarrohr 20, welches in der Ringkammer 4 angeordnet ist, und welches den Elektrodendraht 7 nur lose umschließt, so dass der Elektrodendraht ausreichend vom Referenzelektrolyten umgeben ist. Am unteren Ende des Elektrodendrahts 7 ist ein AgCl-Vorrat vorgesehen, in welchem der Elektrodendraht endet. Von hier können gelöste Silberionen durch Diffusion zum Diaphragma des Stromschlüssels gelangen, wobei die Diffusionsstrecke durch das Kapillarrohr verlängert ist, um die Standzeit des Sensors zu vergrößern.

Zur Vermeidung einer Pumpwirkung durch Relativbewegungen im Bereich hoher Silberionenkonzentration ist es in einer Ausgestaltung der Erfindung vorgesehen, dass sich das Kapillarrohr 20 gemeinsam mit dem Elektrodendraht bewegt. Hierzu ist es entweder mit dem Dichtring 20 oder dem Elektrodendraht 7 mechanisch gekoppelt.

In einer anderen Ausgestaltung kann, der Elektrodendraht zwischen dem Dichtelement und dem Kapillarrohr einen flexiblen, gewundenen Abschnitt aufweisen, der sich bei axialen Verschiebungen des Dichtelements verformt, so dass axiale Verschiebungen zwischen dem Abschnitt der zweiten Elektrode in dem Kapillarrohr und dem Kapillarrohr bei axialen Verschiebungen des Dichtelements vermindert bzw. vermieden werden.

In einer weiteren Ausgestaltung der Erfindung ist anstelle eines Federkorbes eine gewöhnliche metallische Schraubenfeder als elastischer Verformungskörper vorgesehen, wobei die Endabschnitte der Schraubenfeder beispielsweise in einem leitfähigen Dichtring und/oder eine leitfähige Dichtscheibe eingegossen sein können. Selbstverständlich sind andere Befestigungen möglich.

Als Material für das innere Rohr und das äußere Rohr kommen sämtlich gängigen Materialien für Einstabmessketten zur Realisierung der Erfindung in Frage, beispielsweise Glas oder ausgewählte Kunststoffe wie PEEK.

## Patentansprüche

1. Einstabmesskette 1, umfassend: ein erstes Rohr (3) welches zumindest in radialer Richtung elektrisch nicht leitend ist; eine Messmembran (5), welche an einem ersten Endabschnitt des ersten Rohres angeordnet ist und das erste Rohr unter Bildung einer Messkammer dicht verschließt; ein zweites Rohr (2), welches das erste Rohr (3) zumindest abschnittsweise umgibt und mit dem ersten Rohr verbunden ist, so dass zwischen dem ersten Rohr und dem zweiten Rohr eine ringförmige Referenzkammer (4) ausgebildet ist; eine erste Pufferlösung, die in der Messkammer angeordnet ist; eine Elektrolytlösung, die in der der Referenzkammer (4) angeordnet ist; eine erste Elektrode, die mit der Pufferlösung in Kontakt ist, um ein erstes Potential abzuleiten; und eine zweite Elektrode (7), die mit der Elektrolyten in Kontakt ist, um ein zweites Potential abzuleiten; **dadurch gekennzeichnet dass** in der Referenzkammer (4) ein ringförmiges Dichtelement (12) angeordnet ist, welches in der Ringkammer (4) axial verschiebbar ist und das von der Elektrolytlösung eingenommene Volumen in axialer Richtung begrenzt, wobei das Dichtelement mittels eines elektrisch leitenden elastischen Verformungskörpers (14), welcher das erste Rohr umgibt, axial vagespannt ist, die zweite Elektrode (7) mit dem Verformungskörper (14) elektrisch leitend verbunden ist, so dass das Potential der zweiten Elektrode über den \erformungskörper (14) ableitbar ist.

2. Einstabmesskette nach Anspmch 1, wobei der elastische Verformungskörper (14) als elektrische Schirmung für einen Abschnitt der ersten Elektrode (6) dient.

3. Einsabmesskette nach Anspruch 1, wobei die zweite Elektrode (7) mit einem Endabschnitt an dem Dichtelement (12) befestigt ist, und sich mit dem Dichtelement (12) in axialer Richtung in dem Referenzbehälter (4) bewegt.

4. Einstabmesskette nach einem der Ansprüche 1 bis 3, weiterhin umfassend ein ringförmiges Trägerelement, welches in einem Endabschnitt der Referenzkammer, welcher dem ersten Endabschnitt des ersten bzw. zweiten Rohres abgewandt ist, mit dem ersten und/oder dem zweiten Rohr fest verbunden ist, wobei der elastische Verformungskörper (14) zwischen dem Trägerelement und dem Dichtelement (12) axial eingespannt ist.

5. Einstabmesskette nach Anspmch 4, wobei das Trägerelement (18) die Referenzkammer (4) verschließt.

6. Einstabmesskette nach Anspruch 4 oder 5, weiterhin umfassend einen metallischen Ableitkörper (16) zum Ableiten des zweiten Potentials, wobei der Ableitkörper (16) mit dem Trägerkörper (18) fest verbunden ist, und mit der zweiten Elektrode (7) im galvanischen Kontakt steht.

7. Einstabmesskette nach einem der Ansprüche 4 bis 6, wobei der Trägerkörper (18) einen elektrisch leitfähigen Werkstoff aufweist.

8. Einstabmesskette nach einem der vorhergehenden Ansprüche, wobei das Dichtelement (12) einen elektrisch leitfähigen Werkstoff aufweist.

9. Einstabmesskette nach einem der vorhergehenden Ansprüche, wobei die Elektrolytlösung KCl aufweist, und die zweite Elektrode (7) eine Ag/ AgCl-Elektrode ist.

10. Einstabmesskette nach Anspruch 9, weiterhin umfassend ein einseitig geschlossenes Kapillarrohr, welches in der Referenzkammer (4) angeordnet ist, und in welches sich die zweite Elektrode (7) erstreckt, wobei das Kapillarrohr zur Vermeidung von Relativbewegungen direkt oder indirekt mit der zweiten Elektrode (7) gekoppelt ist.

11. Einstabmesskette nach Anspmch 9, weiterhin umfassend ein einseitig geschlossenes Kapillarrohr, welches in der Referenzkammer (4) angeordnet ist, und in welches sich die zweite Elektrode (7) erstreckt, wobei die zweite Elektrode einen Draht umfasst, der zwischen dem Dichtelement (12) und dem Kapillarrohr einen flexiblen, gewundenen Abschnitt aufweist, der sich bei axialen Verschiebungen des Dichtelements verformt, so dass axiale Verschiebungen zwischen dem Abschnitt der zweiten Elektrode (7) in dem Kapillarrohr und dem Kapillarrohr bei axialen Verschiebungen des Dichtelements (12) vermindert bzw. vermieden werden.

## Claims

1. Single-rod measuring cell (1), comprising a first tube (3), which is not electrically conductive at least in the radial direction; a measuring membrane (5), which is arranged on a first end section of the first tube and tightly seals the first tube under the formation of a measuring chamber; a second tube (2), which surrounds the first tube (3) at least in part and is connected to the first tube in such a way that an annular reference chamber (4) is formed between the first tube and the second tube; a first buffer solution, which is arranged in the measuring chamber; an electrolyte solution, which is arranged in the reference chamber (4); a first electrode, which is in contact with the buffer solution in order to discharge a first potential; and a second electrode (7), which is in contact with the electrolyte in order to discharge a second potential; **characterized in that** an annular sealing element (12) is arranged in the reference chamber (4), said annular sealing element being adjustable in the axial direction in the annular chamber (4) and limiting the volume taken up by the electrolyte solution in the axial direction, wherein the sealing element is axially pretensioned by an electrically conductive elastic deformation body (14) that surrounds the first tube, **in that** the second electrode (7) is connected in an electrically conductive manner with the deformation body (14) in such a way that the potential of the second electrode can be discharged via the deformation body (14).

2. Single-rod measuring cell as claimed in Claim 1, wherein the elastic deformation body (14) acts as an electrical shield for a section of the first electrode (6).

3. Single-rod measuring cell as claimed in Claim 1, wherein the second electrode (7) is secured by an end section on the sealing element (12) and moves with the sealing element (12) in an axial direction in the reference vessel (14).

4. Single-rod measuring cell as claimed in one of the Claims 1 to 3, further comprising an annular support element, which is permanently connected to the first and/or second tube in an end section of the reference chamber which faces away from the first end section of the first and/or second tube, wherein the elastic deformation body (14) is axially tensioned between the support element and the sealing element (12).

5. Single-rod measuring cell as claimed in Claim 4, wherein the carrier element (18) seals the reference chamber (4).

6. Single-rod measuring cell as claimed in Claim 4 or 5, further comprising a metal discharge body (16) to discharge the second potential, wherein the discharge body (16) is permanently connected to the support body (18) and is in galvanic contact with the second electrode (7).

7. Single-rod measuring cell as claimed in one of the Claims 4 to 6, wherein the support body (18) features an electrically conductive material.

8. Single-rod measuring cell as claimed in one of the previous claims, wherein the sealing element (12) features an electrically conductive material.

9. Single-rod measuring cell as claimed in one of the previous claims, wherein the electrolyte solution features KCl and the second electrode (7) is an Ag/AgCl electrode.

10. Single-rod measuring cell as claimed in Claim 9, further comprising a capillary tube which is closed at one end and is arranged in the reference chamber (4) and in which the second electrode (7) extends, wherein the capillary tube is directly or indirectly connected to the second electrode (7) to prevent relative movements.

11. Single-rod measuring cell as claimed in Claim 9, further comprising a capillary tube which is closed at one end and is arranged in the reference chamber (4) and in which the second electrode (7) extends, wherein the second electrode (7) comprises a wire which features a flexible, wound section between the sealing element (12) and the capillary tube, said section deforming in the event of axial displacements of the sealing element in such a way that axial displacements between the section of the second electrode (7) in the capillary tube and the capillary tube are reduced or prevented in the event of axial displacements of the sealing element (12).

## Revendications

1. Chaîne de mesure combinée (1), comprenant un premier tube (3), lequel n'est pas électriquement conducteur au moins dans une direction radiale ; une membrane de mesure (5), laquelle est disposée à une première partie d'extrémité du premier tube et obture de façon étanche le premier tube en formant une chambre de mesure ; un deuxième tube (2), qui entoure au moins partiellement le premier tube (3) et est relié avec le premier tube de telle sorte à former entre le premier tube et le deuxième tube une chambre de référence annulaire (4) ; une première solution tampon, qui est disposée dans la chambre de mesure ; un électrolyte, qui est disposé dans la chambre de référence (4) ; une première électrode (6), qui est en contact avec l'électrolyte, afin de décharger un premier potentiel ; et une deuxième électrode (7), qui est en contact avec l'électrolyte, afin de décharger un deuxième potentiel ; **caractérisée en ce qu'**est disposé dans la chambre de référence (4) un élément d'étanchéité annulaire (12), qui peut être déplacé axialement dans la chambre annulaire et délimite en direction axiale le volume occupé par l'électrolyte, l'élément d'étanchéité étant précontraint axialement au moyen d'un corps de déformation élastique (14) électriquement conducteur, lequel corps entoure le premier tube, la deuxième électrode (7) étant reliée par une liaison électroconductrice avec le corps de déformation (14) de telle sorte que le potentiel de la deuxième électrode puisse être déchargé à travers le corps de déformation (14).

2. Chaîne de mesure combinée selon la revendication 1, pour laquelle le corps de déformation élastique (14) sert de blindage électrique pour une section de la première électrode (6).

3. Chaîne de mesure combinée selon la revendication 1, pour laquelle la deuxième électrode (7) est fixée avec une partie d'extrémité sur l'élément d'étanchéité (12) et se déplace avec l'élément d'étanchéité (12) en direction axiale dans le réservoir de référence.

4. Chaîne de mesure combinée selon l'une des revendications 1 à 3, comprenant en outre un élément support annulaire, lequel élément est relié de façon fixe, dans une partie d'extrémité de la chambre de référence, laquelle partie est située à l'opposé de la première partie d'extrémité du premier ou du deuxième tube, avec le premier et/ou le deuxième tube, le corps de déformation élastique (14) étant serré axialement entre l'élément support et l'élément d'étanchéité (12).

5. Chaîne de mesure combinée selon la revendication 4, pour laquelle l'élément support (18) obture la chambre de référence (14).

6. Chaîne de mesure combinée selon la revendication 4 ou 5, comprenant en outre un corps de décharge métallique (16) destiné à la décharge du deuxième potentiel, le corps de décharge étant relié de façon fixe avec l'élément support (18) et est en contact galvanique avec la deuxième électrode (7).

7. Chaîne de mesure combinée selon l'une des revendications 4 à 6, pour laquelle l'élément support (18) comporte un matériau électriquement conducteur.

8. Chaîne de mesure combinée selon l'une des revendications précédentes, pour laquelle l'élément d'étanchéité (12) comporte un matériau électriquement conducteur.

9. Chaîne de mesure combinée selon l'une des revendications précédentes, pour laquelle l'électrolyte comporte du KCl et la deuxième électrode (7) est une électrode Ag/AgCl.

10. Chaîne de mesure combinée selon la revendication 9, comprenant en outre un tube capillaire fermé d'un côté, lequel tube est disposé dans la chambre de référence (4), et dans lequel s'étend la deuxième électrode (7), le tube capillaire étant couplé directement ou indirectement avec la deuxième électrode (7) afin d'empêcher les mouvements relatifs.

11. Chaîne de mesure combinée selon la revendication 9, comprenant en outre un tube capillaire fermé d'un côté, lequel tube est disposé dans la chambre de référence (4), et dans lequel s'étend la deuxième électrode (7), la deuxième électrode (7) comprenant un fil présentant entre l'élément d'étanchéité (12) et le tube capillaire une section tortueuse et flexible, qui se déforme lors des déplacements axiaux de l'élément d'étanchéité, de telle sorte que les déplacements axiaux entre l'électrode (7) - insérée dans le tube capillaire - et le tube capillaire sont réduits ou évités lors des déplacements axiaux de l'élément d'étanchéité (12).
